# FASCICULE DE BREVET EUROPEEN

(11) **EP 1 412 458 B1**
(45) Date de publication et mention de la délivrance du brevet: **14.06.2006**
(21) Numéro de dépôt: 01270584.4
(22) Date de dépôt: 13.12.2001
(51) Int. Cl.: C10G 65/04, C10G 65/12, B01J 29/06

(54) **PROCEDE FLEXIBLE AMELIORE DE PRODUCTION DE BASES HUILES ET DISTILLATS MOYENS AVEC UNE CONVERSION-HYDROISOMERISATION SUIVIE D'UN DEPARAFFINAGE CATALYTIQUE**
VERBESSERTES FLEXIBELES VERFAHREN ZUR HERSTELLUNG VON BASISÖLEN UND MITTELDESTILLATEN MITTELS EINER HYDROISOMERIERUNG UND ANSCHLIESSENDER KATALYTISCHEN ENTPARRAFFINIERUNG
IMPROVED FLEXIBLE METHOD FOR PRODUCING OIL BASES AND MIDDLE DISTILLATES WITH HYDROISOMERIZATION-CONVERSION FOLLOWED BY CATALYTIC DEWAXING

(30) Priorité: 15.12.2000 FR 0016366
(43) Date de publication de la demande: 28.04.2004
(73) Titulaire: Institut Français du Pétrole, 92852 Rueil-Malmaison Cedex (FR)
(72) Inventeur: BENAZZI, Eric, F-78400 Chatou (FR); MARCHAL-GEORGE, Nathalie, F-69230 Saint Genis Laval (FR); CSERI, Tivadar, F-92400 Courbevoie (FR); MARION, Pierre, F-92160 Antony (FR); GUERET, Christophe, F-69560 St Romain en Gal (FR)
(86) Numéro de dépôt international: PCT/FR2001/003975
(87) Numéro de publication internationale: WO 2002/048289

(56) Documents cités:
- WO-A-99/41336
- FR-A- 2 698 863
- FR-A- 2 792 945
- FR-A- 2 805 762
- US-A- 6 039 864
- US-A- 6 051 129

## Description

La présente invention concerne un procédé amélioré de fabrication d'huiles de base de très haute qualité c'est à dire possédant un haut indice de viscosité (VI), une bonne stabilité UV et un faible point d'écoulement, à partir de charges hydrocarbonées (et de préférence à partir de charges issues du procédé Fischer-Tropsch ou à partir de résidus d'hydrocraquage), avec éventuellement simultanément la production de distillats moyens (gasoils, kérosène notamment) de très haute qualité, c'est-à-dire possédant un faible point d'écoulement et un indice de cétane élevé.

### Art antérieur

Les lubrifiants de haute qualité sont d'une importance primordiale pour le bon fonctionnement des machines modernes, des automobiles, et des camions.

Ces lubrifiants sont le plus souvent obtenus par une succession d'étapes de raffinage permettant l'amélioration des propriétés d'une coupe pétrolière. En particulier un traitement des fractions pétrolières lourdes à fortes teneurs en paraffines linéaires ou peu ramifiées est nécessaire afin d'obtenir des huiles de base de bonne qualité et ce avec les meilleurs rendements possibles, par une opération qui vise à éliminer les paraffines linéaires ou très peu branchées, des charges qui seront ensuite utilisées en tant que huiles de base.

FR-A-2 792 945 décrit un procédé de production de bases huiles avec une hydroisomerisation suivie de deparaffinage catalytique. US-A-6 051 129 décrit un deparaffinage à l'aide de EU-1 et ZSM48 ou SSZ-32.

En effet, les paraffines de haut poids moléculaire qui sont linéaires ou très faiblement branchées et qui sont présentes dans les huiles conduisent à des points d'écoulement hauts et donc à des phénomènes de figeage pour des utilisations à basse température. Afin de diminuer les valeurs des points d'écoulement, ces paraffines linéaires pas ou très peu branchées doivent être entièrement ou partiellement éliminées.

Un autre moyen est le traitement catalytique en présence ou en absence d'hydrogène et, compte tenu de leur sélectivité de forme, les zéolithes sont parmi les catalyseurs les plus utilisés.

Des catalyseurs à base de zéolithes telles que les ZSM-5, ZSM-11, ZSM-12, ZSM-22, ZSM-23, ZSM-35 et ZSM-38 ont été décrits pour leur utilisation dans ces procédés.

Tous les catalyseurs utilisés actuellement en hydroisomérisation sont du type bifonctionnels associant une fonction acide à une fonction hydrogénante. La fonction acide est apportée par des supports de grandes surfaces (150 à 800 m².g⁻¹ généralement) présentant une acidité superficielle, telles que les alumines halogénées (chlorées ou fluorées notamment), les alumines phosphorées, les combinaisons d'oxydes de bore et d'aluminium, les silices-alumines amorphes et les silice-alumines. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

La demanderesse se propose donc, selon le procédé décrit dans l'invention, de produire conjointement des distillats moyens de très bonne qualité, des bases huiles de VI et de point d'écoulement au moins égaux à ceux obtenus avec un procédé d'hydroraffinage et/ou d'hydrocraquage.

### Objet de l'invention

La demanderesse a porté ses efforts de recherche sur la mise au point d'un procédé amélioré de fabrication d'huiles lubrifiantes de très haute qualité et de distillats moyens de haute qualité à partir de charges hydrocarbonées et de préférence à partir de charges hydrocarbonées issues du procédé Fischer-Tropsch ou à partir de résidus d'hydrocraquage.
La présente invention porte donc sur un enchaînement de procédés pour la fabrication conjointe d'huiles de bases de très haute qualité et de distillats moyens (gasoils notamment) de très haute qualité à partir de coupes pétrolières. Les huiles obtenues possèdent un haut indice de viscosité (VI), une faible volatilité, une bonne stabilité UV et un faible point d'écoulement.

Plus précisément, l'invention concerne un procédé pour la production d'huiles à partir d'une charge hydrocarbonée (dont de préférence au moins 20 % volume a une température d'ébullition d'au au moins 340°C), ledit procédé comportant les étapes successives suivantes :
(a) conversion de la charge avec hydroisomérisation simultanée d'une partie au moins des n-paraffines de la charge, ladite charge ayant une teneur en soufre inférieure à 1000 ppm pds, une teneur en azote inférieure à 200 ppm pds, une teneur en métaux inférieure à 50 ppm pds, une teneur en oxygène d'au plus 0,2 %, ladite étape se déroulant à une température de 200-500 °C, sous une pression de 2 - 25 MPa, avec une vitesse spatiale de 0,1 - 10h⁻¹, en présence d'hydrogène à un taux généralement compris entre 100-2000 litre d'hydrogène/litre de charge, et en présence d'un catalyseur contenant au moins un métal noble déposé sur un support acide amorphe, la dispersion en métal noble étant comprise entre 20 - 100 %.
(b) déparaffinage catalytique d'au moins une partie de l'effluent issu de l'étape a), réalisé à une température de 200 - 500°C, sous une pression de 1-25 MPa, avec une vitesse volumique horaire de 0,05-50h-1, en présence de 50-2000 litre d'hydrogène/litre d'effluent entrant dans l'étape (b) et en présence d'un catalyseur comprenant au moins un élément hydro-déshydrogénant et au moins un tamis moléculaire choisi parmi les zéolithes ZBM-30, EU-2 et EU-11.

L'étape (a) est donc éventuellement précédée d'une étape hydrotraitement généralement réalisée à une température de 200-450°C, sous une pression de 2 à 25Mpa, avec une vitesse spatiale de 0,1-6h⁻¹, en présence d'hydrogène dans le rapport volumique hydrogène/hydrocarbure de 100-2000 l/l, et en présence d'un catalyseur amorphe comprenant au moins un métal du groupe VIII et au moins un métal du groupe VI B.

La totalité de l'effluent issu de l'étape (a) peut être envoyé dans l'étape (b).

L'étape (a) peut être éventuellement suivie d'une séparation des composés gazeux légers de l'effluent obtenu à l'issue de l'étape (a).

De préférence, l'effluent issu du traitement de conversion-hydroisomérisation (a) est soumis à une étape de distillation (de préférence atmosphérique) de façon à séparer les composés ayant un point d'ébullition inférieur à 340°C (gaz, essence, kérosène, gasoil) des produits ayant un point d'ébullition initial supérieur à au moins 340°C et qui forment le résidu. On sépare ainsi généralement au moins une fraction distillat moyen présentant un point d'écoulement d'au plus -20°C, et un indice de cétane d'au moins 50.

L'étape (b) de déparaffinage catalytique s'applique alors au moins au résidu à l'issu de la distillation qui contient des composés à point d'ébullition supérieur à au moins 340°C. Dans un autre mode de réalisation de l'invention, l'effluent issu de l'étape (a) n'est pas distillé avant de mettre en oeuvre l'étape (b). Tout au plus, il subit une séparation d'au moins une partie des gaz légers (par flash....) et il est ensuite soumis au déparaffinage catalytique.

De préférence, l'étape (b) est réalisée avec un catalyseur contenant au moins un tamis moléculaire dont le système microporeux présente au moins un type principal de canaux à ouvertures de pores ayant 9 ou 10 atomes T, T étant choisi dans le groupe formé par Si/Al, P, B, Ti, Fe, Ga, alternant avec un nombre égal d'atomes oxygène, la distance entre deux ouvertures de pores accessibles à et comportant 9 ou 10 atomes T étant d'au plus égal à 0,75 mm.

Avantageusement, l'effluent issu du traitement de déparaffinage est soumis à une étape de distillation comprenant avantageusement une distillation atmosphérique et une distillation sous vide de façon à séparer au moins une fraction huile à un point d'ébullition supérieur à au moins 340°C. Elle présente le plus souvent un point d'écoulement inférieur à -10°C et un VI supérieur à 95, une viscosité à 100°C d'au moins 3cSt (soit 3mm²/s). Cette étape de distillation est essentielle lorsque il n'y a pas de distillation entre les étapes (a) et (b).

Avantageusement, l'effluent issu du traitement de déparaffinage, éventuellement distillé, est soumis à un traitement d'hydrofinition.

### Description détaillée de l'invention

Le procédé selon l'invention comprend les étapes suivantes :

### La charge

La charge hydrocarbonée à partir de laquelle les huiles et éventuellement les distillats moyens de haute qualité, sont obtenus contient de préférence au moins 20 % volume de composés bouillant au-dessus de 340°C, de préférence à au moins 350°C et avantageusement à au moins 380°C. Cela ne signifie pas que le point d'ébullition est de 380°C et plus, mais de 380°C ou plus.

La charge contient des n-paraffines. De préférence la charge est un effluent issu d'une unité de Fischer-Tropsch. Des charges très variées peuvent être traitées par le procédé.

La charge peut être aussi par exemple des distillats sous vide issus de la distillation directe du brut ou d'unités de conversion telles que le FCC, le coker ou la viscoréduction, ou provenant d'unités d'extraction d'aromatiques, ou provenant d'hydrotraitement ou d'hydroconversion de RAT (résidus atmosphériques) et/ou de RSV (résidus sous vide), ou encore la charge peut être une huile désasphaltée, ou encore un résidu d'hydrocraquage par exemple issu de DSV ou tout mélange des charges précédemment citées. La liste ci-dessus n'est pas limitative.

En général, les charges convenant pour l'objectif huiles ont un point d'ébullition initial supérieur à au moins 340 °C et mieux encore supérieur à au moins 370°C.

La charge introduite dans l'étape (a) de conversion-hydroisomérisation doit être propre. Nous entendrons par charge propre les charges dont la teneur en soufre est inférieure à 1000 ppm poids et de préférence inférieure à 500 ppm poids et de façon encore plus préférée inférieure à 300 ppm poids ou mieux à 100 ppm poids. La teneur en azote est inférieure à 200 ppm poids et de préférence inférieure à 100 ppm poids et de manière encore plus préférée inférieure à 50 ppm poids. La teneur en métaux de la charge tels que nickel et vanadium est extrêmement réduite c'est-à-dire inférieure à 50 ppm poids et de manière plus avantageuse inférieure à 10 ppm poids, ou mieux inférieure à 2 ppm pds.
Dans le cas où les teneurs en produits insaturés ou oxygénés sont susceptibles d'entraîner une désactivation trop importante du système catalytique, la charge (par exemple issue du procédé Fischer-Tropsch) devra, avant d'entrer dans la zone d'hydroisomérisation, subir un hydrotraitement dans une zone d'hydrotraitement. On fait réagir de l'hydrogène avec la charge au contact d'un catalyseur d'hydrotraitement dont le rôle est de réduire la teneur en molécules hydrocarbonées insaturées et oxygénées (produites par exemple lors de la synthèse Fischer-Tropsch).
La teneur en oxygène est ainsi réduite à au plus 0,2 % poids.

Dans le cas où la charge à traiter n'est pas propre au sens défini plus haut, elle est soumise dans un premier temps à une étape préalable d'hydrotraitement, durant lequel, elle est mise en contact, en présence d'hydrogène, avec au moins un catalyseur comportant un support amorphe et au moins un métal ayant une fonction hydro-déshydrogénante assurée par exemple par au moins un élément du groupe VI B et au moins un élément du groupe VIII, à une température comprise entre 200 et 450°C, de préférence 250-450°C avantageusement 330-450°C ou 360-420°C, sous une pression comprise en 5 et 25 Mpa ou mieux inférieure à 20 MPa, de préférence entre 5 et 20 Mpa, la vitesse spatiale étant comprise entre 0,1 et 6 h⁻¹, de préférence, 0,3-3h⁻¹, et la quantité d'hydrogène introduite est telle que le rapport volumique hydrogène/hydrocarbure soit compris entre 100 et 2000 litres/litre.

Le support est généralement à base (de préférence constitué essentiellement) d'alumine ou de silice-alumine amorphe ; il peut également renfermer de l'oxyde de bore, de la magnésie, de la zircone, de l'oxyde de titane ou une combinaison de ces oxydes. La fonction hydro-déshydrogénante est remplie de préférence par au moins un métal ou composé de métal des groupes VIII et VIB de préférence choisi(s) parmi ; molybdène, tungstène, nickel et cobalt.

Ce catalyseur pourra contenir avantageusement du phosphore; en effet il est connu dans l'art antérieur que le composé apporte deux avantages aux catalyseurs d'hydrotraitement : une facilité de préparation lors notamment de l'imprégnation des solutions de nickel et de molybdène, et une meilleure activité d'hydrogénation.

Les catalyseurs préférés sont les catalyseurs NiMo et/ou NiW sur alumine, également les catalyseurs NiMo et/ou NiW sur alumine dopée avec au moins un élément compris dans le groupe des atomes formés par le phosphore, le bore, le silicium et le fluor, ou encore les catalyseurs NiMo et/ou NiW sur silice-alumine, ou sur silice-alumine-oxyde de titane dopée ou non par au moins un élément compris dans le groupe des atomes formés par le phosphore, le bore, le fluor et le silicium.

La concentration totale en oxydes de métaux des groupes VIB et VIII est comprise entre 5 et 40 % en poids et de préférence entre 7 et 30 % et le rapport pondéral exprimé en oxyde métallique entre métal (ou métaux) du groupe VI sur métal (ou métaux) du groupe VIII est de préférence compris entre 20 et 1,25 et encore plus préféré entre 10 et 2. La concentration en oxyde de phosphore P₂O₅ sera inférieure à 15 % poids et de préférence à 10 % poids.

Avant d'être envoyé dans l'étape (a), le produit obtenu à l'issue de l'hydrotraitement subit, si besoin, une séparation intermédiaire de l'eau (H₂O, H₂S, NH₃) de façon à amener la teneur en eau, en H₂S et en NH₃ dans la charge introduite dans l'étape (a) à des valeurs respectivement inférieures à au plus 100 ppm, 200 ppm, 50 ppm. On peut à ce niveau prévoir une éventuellement séparation des produits ayant un point d'ébullition inférieur à 340°C de façon à ne traiter dans l'étape (a) qu'un résidu.

Dans le cas où un résidu d'hydrocraquage est traité, on est alors en présence d'une charge qui a déjà subi un hydrotraitement et un hydrocraquage. La charge propre peut alors être traitée directement dans l'étape (a).
Généralement, l'hydrocraquage à lieu sur un catalyseur zéolitique, à base de plus souvent de zéolite Y, et en particulier des zéolites Y désaluminées.
Le catalyseur contient également au moins un métal du groupe GVIII non-noble et au moins un métal du groupe VIB.

### Etape (a) : Hydroisomérisation-Conversion

### Le catalyseur

L'étape (a) a lieu en présence d'hydrogène et en présence d'un catalyseur bifonctionnel comportant un support acide amorphe (de préférence une silice-alumine amorphe) et une fonction métallique hydro-déshydrogénante assurée par au moins un métal noble. La dispersion en métal noble est de 20-100 %.
Le support est dit amorphe, c'est-à-dire dépourvu de tamis moléculaire, et en particulier de zéolithe, ainsi que le catalyseur. Le support acide amorphe est avantageusement une silice-alumine amorphe mais d'autres supports sont utilisables. Lorsque il s'agit d'une silice-alumine, le catalyseur, généralement, ne contient pas d'halogène ajouté, autre que celui qui pourrait être introduit pour l'imprégnation, du métal noble par exemple.

Durant cette étape les n-paraffines en présence d'un catalyseur bifonctionnel subissent une isomérisation puis éventuellement un hydrocraquage pour conduire respectivement à la formation d'isoparaffines et de produits de craquage plus légers tels que les gasoils et le kérosène. La conversion varie généralement entre 5 et 90 % mais est généralement d'au moins 20 % ou supérieure à 20 %.
Dans un mode de réalisation préféré de l'invention, il est utilisé un catalyseur comprenant une silice-alumine particulière qui permet d'obtenir des catalyseurs très actifs mais aussi très sélectifs dans l'isomérisation de charges telles que définies précédemment.

Un catalyseur préféré comprend (et de préférence est essentiellement constitué de) 0,05-10 % en poids d'au moins un métal noble du groupe VIII déposé sur un support amorphe de silice-alumine (qui de préférence contient 5-70 % en poids de silice) qui présente une surface spécifique BET de 100-500m²/g et le catalyseur présente :
- un diamètre moyen des mésopores compris entre 1-12 nm,
- un volume poreux des pores dont le diamètre est compris entre le diamètre moyen tel que défini précédemment diminué de 3 nm et le diamètre moyen tel que défini précédemment augmenté de 3 nm est supérieur à 40 % du volume poreux total,
- une dispersion du métal noble comprise entre 20-100 %,
- un coefficient de répartition du métal noble supérieur à 0,1.

### Les caractéristiques du catalyseur selon l'invention sont plus en détail :

Teneur en silice : le support préféré utilisé pour l'élaboration du catalyseur décrit dans le cadre de ce brevet est composé de silice SiO₂ et d'alumine Al₂O₃. La teneur en silice du support, exprimée en pourcentage poids, est généralement comprise entre 1 et 95 %, avantageusement voire entre 5 et 95 % et de manière préférée entre 10 et 80 % et de manière encore plus préférée entre 20 et 70 % et entre 22 et 45 %. Cette teneur en silice est parfaitement mesurée à l'aide de la fluorescence X.

Nature du métal noble : pour ce type particulier de réaction, la fonction métallique est apportée par un métal noble du groupe VIII de la classification périodique des éléments et plus particulièrement le platine et/ou du palladium.

Teneur en métal noble : la teneur en métal noble, exprimée en % poids de métal par rapport au catalyseur, est comprise entre 0,05 à 10 et plus préférentiellement comprise entre 0,1 et 5.

Dispersion du métal noble : la dispersion, représentant la fraction de métal accessible au réactif par rapport à la quantité totale de métal du catalyseur, peut être mesurée, par exemple, par titrage H₂/O₂. Le métal est préalablement réduit c'est-à-dire qu'il subit un traitement sous flux d'hydrogène à haute température dans ces conditions telles que tous les atomes de platine accessibles à l'hydrogène soient transformés sous forme métallique. Ensuite, un flux d'oxygène est envoyé dans des conditions opératoires adéquates pour que tous les atomes de platine réduit accessibles à l'oxygène soit oxydés sous forme PtO₂. En calculant la différence entre la quantité d'oxygène introduit et la quantité d'oxygène sortante, on accède à la quantité d'oxygène consommée ; ainsi, on peut alors déduire de cette dernière valeur la quantité de platine accessible à l'oxygène. La dispersion est alors égale au rapport quantité de platine accessible à l'oxygène sur quantité totale de platine du catalyseur. Dans notre cas, la dispersion est comprise entre 20 % et 100 % et de préférence entre 30 % et 100 %.

Répartition du métal noble : la répartition du métal noble représente la distribution du métal à l'intérieur du grain de catalyseur, le métal pouvant être bien ou mal dispersé. Ainsi, il est possible d'obtenir le platine mal réparti (par exemple détecté dans une couronne dont l'épaisseur est nettement inférieure au rayon du grain) mais bien dispersé c'est-à-dire que tous les atomes de platine, situés en couronne, seront accessibles aux réactifs. Dans notre cas, la répartition du platine est bonne c'est-à-dire que le profil du platine, mesuré d'après la méthode de la microsonde de Castaing, présente un coefficient de répartition supérieur à 0,1 et de préférence supérieur à 0,2.

Surface BET : la surface BET du support est comprise entre 100 m²/g et 500 m²/g et de préférence comprise entre 250 m²/g et 450m²/g et pour les supports à base de silice-alumine, de manière encore plus préférée entre 310 m²/g et 450 m²/g.

Diamètre moyen des pores : pour les catalyseurs préférés à base de silice-alumine le diamètre moyen des pores du catalyseur est mesuré à partir du profil de répartition poreuse obtenu à l'aide d'un porosimètre au mercure. Le diamètre moyen des pores est défini comme étant le diamètre correspondant à l'annulation de la courbe dérivée obtenue à partir de la courbe de porosité au mercure. Le diamètre moyen des pores, ainsi défini, est compris entre 1 nm (1x10⁻⁹ mètres) et 12 nm (12x10⁻⁹ mètres) et de préférence compris entre 1 nm (1x10⁻⁹ mètres) et 11 nm (11x10⁻⁹ mètres) et de manière encore plus préférée entre 3 nm (4x10⁻⁹ mètres) et 10,5 nm (10,5x10⁻⁹ mètres).

Répartition poreuse : le catalyseur préféré dont il est question dans ce brevet a une répartition poreuse telle que le volume poreux des pores dont le diamètre est compris entre le diamètre moyen tel que défini précédemment diminué de 3 nm et le diamètre moyen tel que défini précédemment augmenté de 3 nm (soit le diamètre moyen ± 3 nm) est supérieur à 40 % du volume poreux total et de manière préférée compris entre 50 % et 90 % du volume poreux total et plus avantageusement encore entre 50 % et 70 % du volume poreux total.

Volume poreux global du support : pour le catalyseur préféré à base de silice-alumine il est généralement inférieur à 1,0 ml/g et de préférence compris entre 0,3 et 0,9 ml/g et encore plus avantageusement inférieur à 0,85 ml/g.

La préparation et la mise en forme du support, et en particulier de la silice-alumine (notamment utilisée dans le mode de réalisation préféré) est faite par des méthodes usuelles bien connues de l'homme de l'art. De façon avantageuse, préalablement à l'imprégnation du métal, le support pourra subir une calcination comme par exemple un traitement thermique à 300-750°C (600°C préféré) pendant 0,25-10 heures (2 heures préféré) sous 0-30 % volume de vapeur d'eau (pour la silice alumine 7,5 % préféré).

Le sel de métal noble est introduit par une des méthodes usuelles utilisées pour déposer le métal (de préférence du platine et/ou le palladium, la platine étant encore préféré) à la surface d'un support. Une des méthodes préférées est l'imprégnation à sec qui consiste en l'introduction du sel de métal dans un volume de solution qui est égal au volume poreux de la masse de catalyseur à imprégner. Avant l'opération de réduction, le catalyseur pourra subir une calcination comme par exemple un traitement sous air sec à 300-750°C (520°C préféré) pendant 0,25-10 heures (2 heures préféré).

Avant utilisation dans la réaction d'hydroisomérisation-conversion, le métal contenu dans le catalyseur doit être réduit. Une des méthodes préférées pour conduire la réduction du métal est le traitement sous hydrogène à une température comprise entre 150°C et 650°C et une pression totale comprise entre 0,1 et 25 Mpa. Par exemple, une réduction consiste en un palier à 150°C de 2 heures puis une montée en température jusqu'à 450°C à la vitesse de 1 °C/min puis un palier de 2 heures à 450°C ; durant toute cette étape de réduction, le débit d'hydrogène est de 1000 litres hydrogène/ litre catalyseur. Notons également que toutes méthode de réduction ex-situ est convenable.

Les conditions opératoires dans lesquelles est effectuée cette étape (a) sont importantes.

La pression sera généralement maintenue entre 2 et 25 MPa (le plus souvent d'au moins 5 MPa) et de préférence 2 (ou 3) à 20 MPa et avantageusement de 2 à 18 MPa, la vitesse spatiale sera habituellement comprise entre 0,1 h⁻¹ et 10 h⁻¹ et de préférence entre 0,2 et 10h⁻¹ est avantageusement entre 0,1 ou 0,5h⁻¹ et 5, 0h⁻¹, et un taux d'hydrogène généralement compris entre 100 et 2000 litres d'hydrogène par litre de charge et préférentiellement entre 150 et 1500 litres d'hydrogène par litre de charge.

La température utilisée dans cette étape est le plus souvent comprise entre 200 et 500°C (ou450°C) et préférentiellement de 250°C à 450°C avantageusement de 300 à 450°C, et encore plus avantageusement supérieure à 340°C, par exemple entre 320-450°C.

Les deux étapes d'hydrotraitement et d'hydroisomérisation-conversion peuvent être réalisées sur les deux types de catalyseurs dans des (deux ou plusieurs) réacteurs différents, ou/et sur au moins deux lits catalytiques installés dans un même réacteur.

Ainsi que cela a été montré dans le brevet US-5,879,539, l'emploi du catalyseur ci-dessous décrit dans l'étape (a) a pour effet d'augmenter l'indice de viscosité (VI) de + 10 points. Plus généralement, on constate que l'augmentation de VI est d'au moins 2 points, les VI étant mesurés sur une charge (résidu) déparaffinée au solvant et sur le produit issu de l'étape (a) également déparaffiné au solvant, en visant une température de point d'écoulement comprise entre - 15 et - 20°C.

On obtient généralement une augmentation de VI d'au moins 5 points, et très souvent de plus de 5 points, voire plus de 10 points.

Il est possible de contrôler l'augmentation de VI notamment à partir de la mesure de la conversion. Il sera ainsi possible d'optimiser la production vers des huiles à haut VI ou vers des rendements huiles plus élevés mais avec des VI moins élevés.

Parallèlement à l'augmentation de VI, il est le plus souvent obtenu un abaissement du point d'écoulement qui peut aller de quelques degrés jusqu'à 10-15°C voire plus (25°C par exemple). L'ampleur de l'abaissement varie en fonction de la conversion et donc des conditions opératoires et de la charge.

### Traitement de l'effluent issu de l'étape (a)

Dans un mode de réalisation préféré, l'effluent issu de l'étape (a) d'hydroisomérisation-conversion peut en totalité être traité dans l'étape (b) de déparaffinage. Dans une variante, il pourra subir une séparation d'une partie au moins (et de préférence d'au moins une majeure partie) de gaz légers qui comprennent l'hydrogène et éventuellement aussi des composés hydrocarbonés à au plus 4 atomes de carbone. L'hydrogène peut être séparé préalablement. Le mode de réalisation (hors variante), avec passage dans l'étape (b) de la totalité de l'effluent de l'étape (a), est économiquement intéressant, puisque une seule unité de distillation est utilisée à la fin du procédé. De plus, à la distillation finale (après déparaffinage catalytique ou traitements ultérieurs) un gasoil grand froid est obtenu.

Avantageusement dans un autre mode de réalisation, l'effluent issu de l'étape (a) est distillé de façon à séparer les gaz légers et également séparer au moins un résidu contenant les composés à point d'ébullition supérieur à au moins 340°C. Il s'agit de préférence d'une distillation atmosphérique.

On peut avantageusement distiller pour obtenir plusieurs fractions (essence, kérosène, gazole par exemple), à point d'ébullition d'au plus 340°C et une fraction (appelée résidu) à point d'ébullition initial supérieur à au moins 340°C et mieux supérieur à 350°C et de préférence d'au moins 370°C ou 380°C.

Selon une variante préférée de l'invention, cette fraction (résidu) sera ensuite traité dans l'étape de déparaffinage catalytique, c'est à dire sans subir de distillation sous vide. Mais dans une autre variante, on peut utiliser une distillation sous vide.

Dans un mode de réalisation, plus axé sur un objectif de production de distillats moyens, et toujours selon l'invention, il est possible de recycler une partie du résidu issu de l'étape de séparation vers le réacteur contenant le catalyseur d'hydroisomérisation de manière à le convertir et augmenter la production de distillats moyens.
D'une façon générale, on appelle dans ce texte distillats moyens, la (les) fraction(s) à point d'ébullition initial d'au moins 150°C et final allant jusqu'avant le résidu, c'est-à-dire généralement jusqu'à 340°C, 350°C ou de préférence inférieur à 370°C ou à 380°C.

L'effluent issu de l'étape (a) peut subir, avant ou après distillation, d'autres traitements tel que par exemple une extraction d'une partie au moins des composés aromatiques.

### Etape (b) : Hydrodéparaffinage catalytique

Une partie au moins de l'effluent, issu de l'étape (a), effluent ayant éventuellement subi les séparations et/ou traitements décrits ci-dessus, est alors soumise à une étape de déparaffinage catalytique en présence d'hydrogène et d'un catalyseur d'hydrodéparaffinage comportant une fonction acide, une fonction métallique hydro-déshydrogénante et au moins une matrice.

Notons que les composés bouillant au-dessus d'au moins 340°C sont toujours soumis au déparaffinage catalytique.

### Le catalyseur

La fonction acide est assurée par au moins un tamis moléculaire et de préférence un tamis moléculaire dont le système microporeux présente au moins un type principal de canaux dont les ouvertures sont formées d'anneaux qui contiennent 10 ou 9 atomes T. Les atomes T sont les atomes tétraédriques constitutifs du tamis moléculaire et peuvent être au moins un des éléments contenus dans l'ensemble suivant des atomes (Si, Al, P, B, Ti, Fe, Ga). Dans les anneaux constitutifs des ouvertures de canaux, les atomes T, définis précédemment, alternent avec un nombre égal d'atomes d'oxygène. Il est donc équivalent de dire que les ouvertures sont formées d'anneaux qui contiennent 10 ou 9 atomes d'oxygène ou formées d'anneaux qui contiennent 10 ou 9 atomes T.

Le catalyseur selon l'invention comprend au moins un tamis choisi parmi ZBM-30, EU-2 et EU-11. Il peut également comprendre au moins un tamis moléculaire présentant les caractéristiques ci-dessus.

Le tamis moléculaire entrant dans la composition du catalyseur d'hydrodéparaffinage peut aussi comporter d'autres types de canaux mais dont les ouvertures sont formées d'anneaux qui contiennent moins de 10 atomes T ou atomes d'oxygène.

Le tamis moléculaire entrant dans la composition du catalyseur préféré possède en outre une largeur de pont, distance entre deux ouvertures de pores, telle que définie précédemment, qui est d'au plus 0,75 nm (1nm =10-9 m) de préférence comprise entre 0,50 nm et 0,75 nm, de manière encore plus préférée entre 0,52 nm et 0,73 nm ; de tels tamis permettent l'obtention de bonnes performances catalytiques dans l'étape d'hydrodéparaffinage.

La mesure de largeur de pont est réalisée en utilisant un outil de graphisme et de modélisation moléculaire tel que Hyperchem ou Biosym, qui permet de construire la surface des tamis moléculaires en question et, en tenant compte des rayons ioniques des éléments présents dans la charpente du tamis, de mesurer la largeur de pont.

L'utilisation de tamis moléculaires ainsi sélectionnés, dans les conditions décrites ci-dessus, parmi les nombreux tamis moléculaires existants déjà, permet notamment la production de produits à faible point d'écoulement et haut indice de viscosité avec de bons rendements dans le cadre du procédé selon l'invention.

Les tamis moléculaires pouvant également entrer dans la composition du catalyseur préféré d'hydrodéparaffinage catalytique sont, à titre d'exemples, les zéolithes suivantes : Ferrierite, NU-10, EU-13, EU-1.
De préférence les tamis moléculaires entrant également dans la composition du catalyseur d'hydrodéparaffinage sont compris dans l'ensemble formé par la ferrierite et la zéolithe EU-1.

D'une manière générale, le catalyseur d'hydrodéparaffinage peut également comprendre au moins une zéolithe choisie dans le groupe formé par NU-10, EU-1, EU-13, ferrierite, ZSM-22, Theta-1, ZSM-50, ZSM-23, NU-23, ZSM-35, ZSM-38, ZSM-48, ISI-1, KZ-2, ISI-4, KZ-1.

La teneur pondérale en tamis moléculaire dans le catalyseur d'hydrodéparaffinage est comprise entre 1 et 90 %, de préférence entre 5 et 90% et de manière encore plus préférée entre 10 et 85 %.

Les matrices utilisées pour réaliser la mise en forme du catalyseur sont à titre d'exemples et de façon non limitative, les gels d'alumine, les alumines, la magnésie, les silice-alumines amorphes, et leurs mélanges. Des techniques telles que l'extrusion, le pastillage ou la dragéification, peuvent être utilisées pour réaliser l'opération de mise en forme.

Le catalyseur comporte aussi une fonction hydro-déshydrogénante assurée, par exemple, par au moins un élément du groupe VIII et de préférence au moins un élément noble compris dans l'ensemble formé par le platine et le palladium. La teneur pondérale en métal non noble du groupe VIII, par rapport au catalyseur final, est comprise entre 1 et 40% de préférence entre 10 et 30%. Dans ce cas, le métal non noble est souvent associé à au moins un métal du groupe VIB (Mo et W préférés). S'il s'agit d'au moins un métal noble du groupe VIII, la teneur pondérale, par rapport au catalyseur final, est inférieure à 5%, de préférence inférieure à 3% et de manière encore plus préférée inférieure à 1,5%.

Dans le cas de l'utilisation de métaux nobles du groupe VIII, le platine et/ou le palladium sont de préférence localisés sur la matrice.

Le catalyseur d'hydrodéparaffinage selon l'invention peut en outre contenir de 0 à 20%, de préférence de 0 à 10% poids (exprimées en oxydes) de phosphore. La combinaison de métal (aux) du groupe VI B et/ou de métal (aux) du groupe VIII avec le phosphore est particulièrement avantageux.

### Le traitement

Un résidu obtenu à l'issu de l'étape (a) et de la distillation et qui est intéressant à traiter dans cette étape (b) d'hydrodéparaffinage, possède les caractéristiques suivantes : il présente, un point d'ébullition initial supérieur à 340°C et de préférence supérieur à 370°C, un point d'écoulement d'au moins 15°C, un indice de viscosité de 35 à 165 (avant déparaffinage), de préférence au moins égal à 110 et de manière encore plus préférée inférieur à 150, une viscosité à 100°C supérieure ou égale à 3 cSt (mm²/s), une teneur en composés aromatiques inférieure à 10 % pds, une teneur en azote inférieure à 10 ppm pds, une teneur en soufre inférieure à 50 ppm pds ou mieux à 10 ppm pds.

Les conditions opératoires dans lesquelles s'opère l'étape catalytique du procédé de l'invention sont les suivantes :
- la température de réaction est comprise entre 200 et 500°C et de préférence entre 250 et 470°C, avantageusement 270-430°C ;
- la pression est comprise entre 0,1 (ou 0,2) et 25 MPa (10⁶ Pa) et de préférence entre 1,0 et 20 MPa ;
- la vitesse volumique horaire (vvh exprimée en volume de charge injectée par unité de volume de catalyseur et par heure) est comprise entre environ 0,05 et environ 50 et de préférence entre environ 0,1 et environ 20 h⁻¹ et de manière encore plus préférée entre 0,2 et 10 h⁻¹.

Elles sont choisies pour obtenir le point d'écoulement recherché.

Le contact entre la charge et le catalyseur est réalisé en présence d'hydrogène. Le taux d'hydrogène utilisé et exprimé en litres d'hydrogène par litre de charge est compris entre 50 et environ 2000 litres d'hydrogène par litre de charge et de préférence entre 100 et 1500 litres d'hydrogène par litre de charge.

### L'effluent obtenu

L'effluent en sortie de l'étape (b) d'hydrodéparaffinage, est envoyé dans le train de distillation, qui intègre de préférence une distillation atmosphérique et une distillation sous vide, qui a pour but de séparer les produits de conversion de point d'ébullition inférieur à 340°C et de préférence inférieur à 370°C, (et incluant notamment ceux formés lors de l'étape d'hydrodéparaffinage catalytique), et de séparer la fraction qui constitue la base huile et dont le point initial d'ébullition est supérieur à au moins 340°C et de préférence supérieur ou égal à 370°C.

Par ailleurs, cette section de distillation sous vide permet de séparer les différents grades d'huiles.

De préférence, avant d'être distillé, l'effluent en sortie de l'étape (b) d'hydrodéparaffinage catalytique est, au moins en partie et de préférence, dans sa totalité, envoyé sur un catalyseur d'hydrofinishing (hydrofinition) en présence d'hydrogène de manière à réaliser une hydrogénation poussée des composés aromatiques qui nuisent à la stabilité des huiles et des distillats. Cependant, l'acidité du catalyseur doit être suffisamment faible pour ne pas conduire à la formation de produit de craquage de point d'ébullition inférieur à 340°C de manière à ne pas dégrader les rendements finaux notamment en huiles.

Le catalyseur utilisé dans cette étape comporte au moins un métal du groupe VIII et/ou au moins un élément du groupe VIB de la classification périodique. Les fonctions métalliques fortes : platine et/ou palladium, ou des combinaisons nickel-tungstène, nickel-molydbène seront avantageusement utilisées pour réaliser une hydrogénation poussée des aromatiques.

Ces métaux sont déposés et dispersés sur un support de type oxyde amorphe ou cristallin, tel que par exemple, les alumines, les silices, les silice-alumines.

Le catalyseur d'hydrofinition (HDF) peut aussi contenir au moins un élément du groupe VII A de la classification périodique des éléments. De façon préférée ces catalyseurs contiennent du fluor et/ou du chlore.

Les teneurs pondérales en métaux sont comprises entre 10 et 30 % dans le cas des métaux non-nobles et inférieures à 2 %, de manière préférée comprise entre 0,1 et 1,5 %, et de manière encore plus préférée entre 0,1 et 1,0 % dans le cas des métaux nobles.

La quantité totale d'halogène est comprise entre 0,02 et 30 % pds avantageusement 0,01 à 15 %, ou encore à 0,01 à 10 %, de préférence 0,01 à 5 %.

On pourra citer parmi les catalyseurs utilisables dans cette étape d'hydrofinition, et conduisant à d'excellentes performances, et notamment pour l'obtention d'huiles médicinales, les catalyseurs contenant au moins un métal noble du groupe VIII (platine et VIII par exemple) et au moins un halogène (chlore et/ou fluor), la combinaison chlore et fluor étant préférée.

Les conditions opératoires dans lesquelles s'opère l'étape d'hydrofinition du procédé de l'invention sont les suivantes :
- la température de réaction est comprise entre 180 et 400°C et de préférence entre 210 et 350°C, avantageusement 230-320°C ;
- la pression est comprise entre 0,1 et 25 Mpa (106 Pa) et de préférence entre 1,0 et 20 Mpa ;
- la vitesse volumique horaire (vvh exprimée en volume de charge injectée par unité de volume de catalyseur et par heure) est comprise entre environ 0,05 et environ 100 et de préférence entre environ 0,1 et environ 30 h⁻¹.

Le contact entre la charge et le catalyseur est réalisé en présence d'hydrogène. Le taux d'hydrogène utilisé et exprimé en litres d'hydrogène par litre de charge est compris entre 50 et environ 2000 litres d'hydrogène par litre de charge et de préférence entre 100 et 1500 litres d'hydrogène par litre de charge.

Avantageusement, la température de l'étape d'hydrofiniton(HDF) est inférieure à la température de l'étape d'hydrodéparaffinage catalytique (HDPC). La différence T_{HDPC-}T_{HDF} est généralement comprise entre 20 et 200, et de préférence entre 30 et 100°C. L'effluent en sortie d'HDF est alors envoyé dans le train de distillation.

### Les produits

Les huiles de bases obtenues selon ce procédé présentent un point d'écoulement inférieur à -10°C, un VI supérieur à 95, de préférence supérieur à 110 et de manière encore plus préférée supérieur à 120, une viscosité d'au moins 3,0 cSt à 100°C, une couleur ASTM inférieure à 1 et une stabilité aux UV telle que l'accroissement de la couleur ASTM est compris entre 0 et 4 et de préférence entre 0,5 et 2,5.

Le test de stabilité aux UV, adapté des procédés ASTM D925-55 et D1148-55, fournit une méthode rapide pour comparer la stabilité des huiles de lubrification exposées à une source de rayons ultaviolets. La chambre d'essai est constituée d'une enceinte métallique munie d'un plateau tournant qui reçoit les échantillons d'huiles. Une ampoule produisant les mêmes rayons ultaviolets que ceux de la lumière solaire et placée au sommet de la chambre d'essai est dirigée vers le bas sur les échantillons. Parmi les échantillons est incluse une huile standard à caractéristiques U.V connues. La couleur ASTM D1500 des échantillons est déterminée à t=0 puis après 45 h d'exposition à 55°C. Les résultats sont transcrits pour l'échantillon standard et les échantillons de l'essai comme suit :
a) couleur initiale ASTM D1500,
b) couleur finale ASTM D1500,
c) accroissement de la couleur,
d) trouble,
e) précipité.

Un autre avantage du procédé selon l'invention est qu'il est possible d'atteindre des teneurs en aromatiques très basses, inférieures à 2 % poids de préférence à 1 % poids et mieux inférieur à 0,05 % poids) et même d'aller jusqu'à la production des huiles blanches de qualité médicinale ayant des teneurs en aromatiques inférieures à 0,01 % poids. Ces huiles ont des valeurs d'absorbance UV à 275, 295 et 300 nanomètres respectivement inférieures à 0,8, 0,4 et 0,3 (méthode ASTM D2008) et une couleur Saybolt comprise entre 0 et 30.

De façon particulièrement intéressante donc, le procédé selon l'invention permet aussi d'obtenir des huiles blanches médicinales. Les huiles blanches médicales sont des huiles minérales obtenues par un raffinage poussé du pétrole, leur qualité est soumise à différentes réglementations qui visent à garantir leur innocuité pour des applications pharmaceutiques, elles sont dépourvues de toxicité et se caractérisent par leur densité et leur viscosité. Les huiles blanches médicinales comprennent essentiellement des hydrocarbures saturés, elles sont chimiquement inertes et leur teneur en hydrocarbures aromatiques est faible. Une attention particulière est portée aux composés aromatiques et notamment à 6 hydrocarbures aromatiques polycycliques (P.A.H. pour l'abréviation anglo-saxonne de polycyclic aromatic hydrocarbons) qui sont toxiques et présents à des concentrations d'une partie par milliard en poids de composés aromatiques dans l'huile blanche. Le contrôle de la teneur totale en aromatiques peut être effectué par la méthode ASTM D 2008, ce test d'adsorption UV à 275, 292 et 300 nanomètres permet de contrôler une absorbance inférieure respectivement à 0,8, 0,4 et 0,3 (c'est à dire que les huiles blanches ont des teneurs en aromatiques inférieures à 0,01 % en poids). Ces mesures sont effectuées avec des concentrations de 1g d'huile par litre, dans une cuve de 1 cm. Les huiles blanches commercialisées se différencient par leur viscosité mais aussi par leur brut d'origine qui peut être paraffinique ou naphténique, ces deux paramètres vont induire des différences à la fois dans les propriétés physico-chimiques des huiles blanches considérées mais aussi dans leur composition chimique.
Actuellement les coupes huiles, qu'elles proviennent soit de la distillation directe d'un pétrole brut suivi d'une extraction des composés aromatiques par un solvant, ou qu'elles soient issues de procédé d'hydroraffinage catalytique ou d'hydrocraquage, contiennent encore des quantités non négligeables de composés aromatiques. Dans le cadre législatif actuel de la majorité des pays industrialisés, les huiles blanches dites médicinales doivent avoir une teneur en aromatiques inférieure à un seuil imposé par la législation de chacun des pays. L'absence de ces composés aromatiques dans les coupes huiles se traduit par une spécification de couleur Saybolt qui doit être sensiblement d'au moins 30 (+30), une spécification maximale d'adsorption U.V. qui doivent être inférieures à 1,60 à 275 nm sur un produit pur en cuve de 1 centimètre et une spécification maximale d'absorption des produits d'extraction par du DMSO qui doit être inférieure à 0,1 pour le marché américain (Food and Drug Administration, norme n° 1211145). Ce dernier test consiste à extraire spécifiquement des hydrocarbures aromatiques polycycliques à l'aide d'un solvant polaire, souvent le DMSO, et à contrôler leur teneur dans l'extrait par une mesure d'absorption UV dans le domaine 260-350 nm.

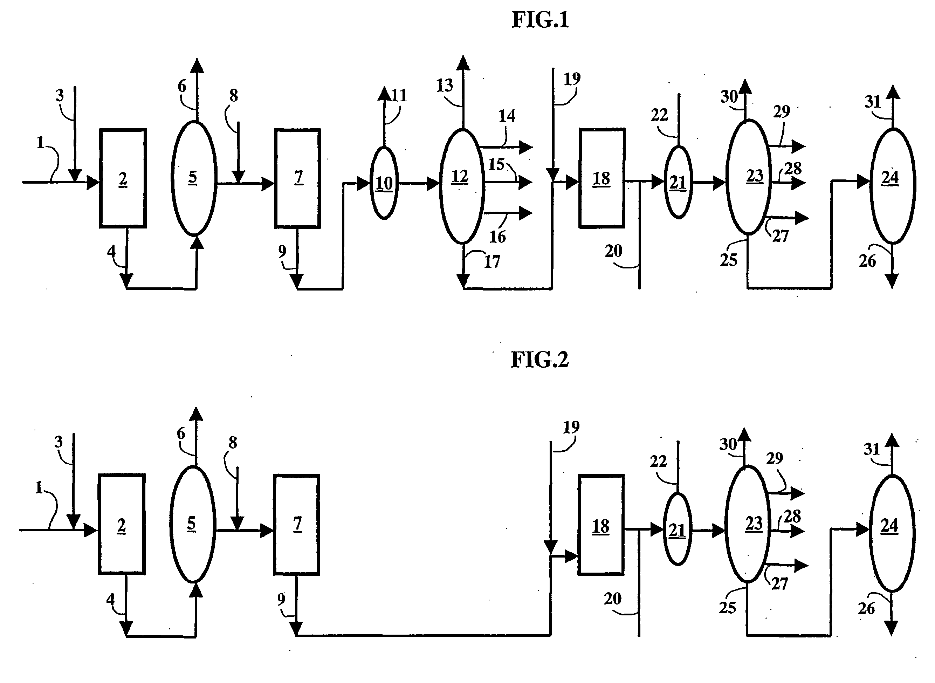

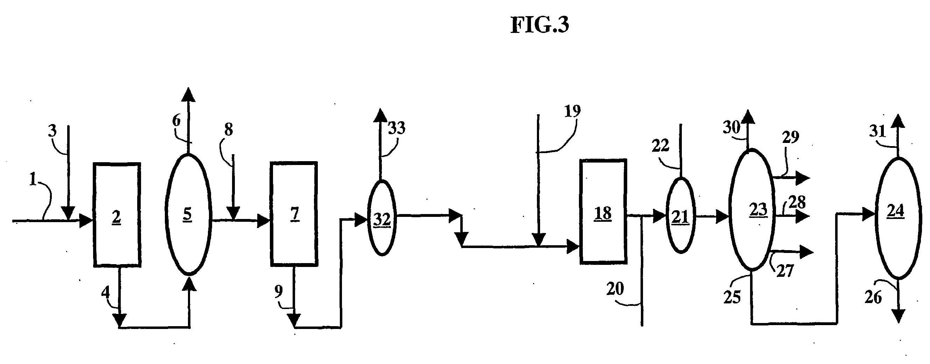

L'invention sera illustrée avec les figures 1 à 3, représentant des modes de réalisations différents pour le traitement d'une charge, par exemple, issue du procédé Fischer-Tropsch ou d'un résidu d'hydrocraquage.

### Figure 1

Sur la figure 1, la charge entre par la conduite (1) dans une zone d'hydrotraitement (2) (qui peut être composée de un ou plusieurs réacteurs, et comprendre un ou plusieurs lits catalytiques de un ou plusieurs catalyseurs) dans laquelle entre de l'hydrogène (par exemple par la conduite (3)) et où est réalisée l'étape d'hydrotraitement.

La charge hydrotraitée est transférée par la conduite (4) dans la zone d'hydroisomérisation (7) (qui peut être composée de un ou plusieurs réacteurs, et comprendre un ou plusieurs lits catalytiques de un ou plusieurs catalyseurs) où est réalisée, en présence d'hydrogène, l'étape (a) d'hydroisomérisation. De l'hydrogène peut être amené par la conduite (8).

Sur cette figure, avant d'être introduite dans la zone (7), la charge à hydroisomériser est débarrassée d'une grande partie de son eau dans le ballon (5), l'eau sortant par la conduite (6) et éventuellement de l'ammoniac et de l'hydrogène sulfuré H₂S, dans le cas où la charge qui entre par la conduite 1 contient du soufre et de l'azote.

L'effluent issu de la zone (7) est envoyé par une conduite (9) dans un ballon (10) pour séparation de l'hydrogène qui est extrait par une conduite (11), l'effluent est ensuite distillé à pression atmosphérique dans la colonne (12) d'où est extraite en tête par la conduite (13) une fraction légère contenant les composés à au plus 4 atomes de carbone et ceux bouillant en dessous.
Il est obtenu également au moins une fraction essence (14) et au moins une fraction distillat moyen (kérosène(15) et gazole (16) par exemple).

Il est obtenu en fond de colonne une fraction contenant les composés à point d'ébullition supérieur à au moins 340°C. Cette fraction est évacuée par la conduite (17) vers la zone (18) de déparaffinage catalytique.

La zone (18) de déparaffinage catalytique (comportant un ou plusieurs réacteurs, un ou plusieurs lits catalytiques de un ou plusieurs catalyseurs) reçoit également de l'hydrogène par une conduite (19) pour réaliser l'étape (b) du procédé.
L'effluent obtenu sortant par la conduite (20) est séparé dans un train de distillation comportant outre le ballon (21) pour séparer l'hydrogène par une conduite (22), une colonne de distillation atmosphérique (23) et une colonne sous vide (24) qui traite le résidu de distillation atmosphérique transféré par la conduite (25), résidu à point d'ébullition initial supérieur à 340°C.

Il est obtenu comme produits à l'issue des distillations, une fraction huile (conduite 26) et des fractions bouillant plus bas, comme le gasoil (conduite 27), kérosène (conduite 28) essence (conduite 29) ; les gaz légers s'éliminant par la conduite (30) de la colonne atmosphérique et par la conduite (31) de par la colonne de distillation sous vide.

L'effluent sortant par la conduite (20) peut aussi être avantageusement envoyé dans une zone d'hydrofinition (non représentée) (comportant un ou plusieurs réacteurs, un ou plusieurs lits catalytiques de un ou plusieurs catalyseurs) avant d'être injecté dans le train de séparation. De l'hydrogène peut être ajouté si besoin dans cette zone. L'effluent sortant est alors transféré dans le ballon (21) et le train de distillation décrit.

Pour ne pas alourdir la figure, le recyclage hydrogène n'a pas été représenté, que ce soit au niveau du ballon (10) vers l'hydrotraitement et/ou l'hydroisomérisation, et/ou au niveau du ballon (21) vers le déparaffinage et/ou l'hydrofinition.

### Figure 2

On reconnaîtra les références de la figure 1 ici reprise. Dans ce mode de réalisation, la totalité de l'effluent issu de la zone (7) d'hydroisomérisation-conversion (étape a) passe directement par la conduite (9) dans la zone (18) de déparaffinage catalytique (étape b).

### Figure 3

De la même façon que précédemment, les références de la figure 1 ont été conservées. Dans ce mode de réalisation, l'effluent issu de la zone (7) d'hydroisomérisation-conversion (étape a) subit dans le ballon (32) une séparation d'une partie au moins des gaz légers (hydrogène et composés hydrocarbonés à au plus 4 atomes de carbone) par exemple par flash. Les gaz séparés sont extraits par la conduite (33) et l'effluent résiduel est envoyé par la conduite (34) dans la zone (18) de déparaffinage catalytique.

On notera que sur les figures 1, 2 et 3 une séparation a été prévue sur l'effluent issu de la zone (18) de déparaffinage catalytique. Cette séparation peut ne pas être mise en oeuvre lorsque ledit effluent est traité ultérieurement dans une zone d'hydrofinition, la séparation ayant alors lieu bien après ledit traitement.
Il s'agit ici de la séparation réalisée dans les ballons ou colonnes 21, 23, 24.

## Revendications

1. Procédé pour la production d'huiles à partir d'une charge hydrocarbonée ledit procédé comportant les étapes successives suivantes :
(a) conversion de la charge avec hydroisomérisation simultanée d'une partie au moins des n-paraffines de la charge, ladite charge ayant une teneur en soufre inférieure à 1000. ppm pds, une teneur en azote inférieure à 200 ppm pds, une teneur en métaux inférieure à 50 ppm pds, une teneur en oxygène d'au plus 0,2 % pds, ladite étape se déroulant à une température de 200-500 °C, sous une pression de 2 - 25 MPa, avec une vitesse spatiale de 0,1 - 10h⁻¹, en présence d'hydrogène, et en présence d'un catalyseur contenant au moins un métal noble déposé sur un support acide amorphe, la dispersion en métal noble étant comprise entre 20 - 100 %.
(b) déparaffinage catalytique d'au moins une partie de l'effluent issu de l'étape (a), réalisé à une température de 200 - 500°C, sous une pression de 1-25 Mpa, avec une vitesse volumique horaire de 0.05-50h-1, en présence de 50-2000 litre d'hydrogène/litre d'effluent entrant dans l'étape (b) et en présence d'un catalyseur comprenant au moins un élément hydro-déshydrogénant et au moins un tamis moléculaire choisi dans le groupe formé par ZBM-30, EU-2, et EU-11.

2. Procédé selon la revendication 1 dans lequel pour l'étape (a) Il est utilisé un catalyseur contenant au moins un métal noble déposé sur une silice-alumine amorphe.

3. Procédé selon l'une des revendications précédentes dans lequel il est utilisé pour l'étape (a) un catalyseur essentiellement constitué de 0,05 - 10 % en poids d'au moins un métal noble du groupe VIII déposé sur un support amorphe de silice-alumine qui contient 5 - 90 % en poids de silice et présente une surface spécifique BET de 100-500 m²/g et le catalyseur présente:
- un diamètre moyen des pores compris entre 1 - 12 nm,
- un volume poreux des pores dont le diamètre est compris entre le diamètre moyen tel que défini précédemment diminué de 3 nm et le diamètre moyen tel que défini précédemment augmenté de 3 nm est supérieur à 40 % du volume poreux total,
- une dispersion du métal noble comprise entre 20 - 100 %,
- un coefficient de répartition du métal noble supérieur à 0,1.

4. Procédé selon l'une des revendications précédentes dans lequel le métal noble du catalyseur de l'étape (a) est le platine et/ou le palladium.

5. Procédé selon l'une des revendications précédentes dans lequel la totalité de l'effluent de l'étape (a) est traité dans l'étape (b).

6. Procédé selon l'une des revendications 1 à 4 dans lequel l'effluent issu de l'étape (a) est distillé de façon à séparer les gaz légers et au moins un résidu contenant les composés à point d'ébullition supérieur à au moins 340°C, ledit résidu étant soumis à l'étape (b).

7. Procédé selon l'une des revendications précédentes dans lequel l'effluent issu de l'étape (b) est distillé de façon à séparer une huile contenant les composés à point d'ébullition supérieur à au moins 340°C.

8. Procédé selon la revendication 7 comportant une distillation atmosphérique suivie d'une distillation sous vide du résidu atmosphérique.

9. Procédé selon l'une des revendications précédentes dans lequel la charge soumise à l'étape (a) a subi préalablement un hydrotraitement puis éventuellement une séparation de l'eau, de l'ammoniac, et de l'hydrogène sulfuré.

10. Procédé selon l'une des revendications précédentes dans lequel le catalyseur de déparaffinage catalytique contient également au moins une zéolithe choisie dans la groupe formé par NU-10, EU-1, EU-13, ferrierite, ZSM-22, Theta-1, ZSM-50, ZSM-23, NU-23, ZSM-35, ZSM-38, ZSM-48, ISI-1, KZ-2, ISI-4, et KZ-1.

11. Procédé selon l'une des revendications précédentes dans lequel l'effluent issu de l'étape (b) est soumis à une étape d'hydrofinition avant d'être distillé.

12. Procédé selon l'une des revendications précédentes dans lequel la charge hydrocarbonnée traitée contient au moins 20 % volume de composés bouillant au-dessus de 340°C.

13. Procédé selon l'une des revendications précédentes dans lequel la charge hydrocarbonée traitée est choisie dans le groupe formé par les effluents issus d'unité Fischer-Tropsch, les distillats sous vide issus de la distillation directe du brut, les distillats sous vide issus d'unités de conversion, les distillats sous vide provenant d'unités d'extraction d'aromatiques, les distillats sous vide provenant de désulfuration ou d'hydroconversion de résidus atmosphériques et/ou de résidus sous vide, les huiles désasphaltées, les résidus d'hydrocraquage ou tout mélange des dites charges,

## Claims

1. A process for producing oils from a hydrocarbon feed, said process comprising the following steps in succession:
(a) converting the feed with simultaneous hydroisomerisation of at least a portion of the n-paraffins of the feed, said feed having a sulphur content of less than 1000 ppm by weight, a nitrogen content of less than 200 ppm by weight, a metals content of less than 50 ppm by weight, an oxygen content of at most 0.2% by weight, said step being carried out at a temperature of 200-500°C, at a pressure of 2-25 MPa, with a space velocity of 0.1-10 h⁻¹, in the presence of hydrogen, and in the presence of a catalyst containing at least one noble metal deposited on an amorphous acidic support, the dispersion of the noble metal being 20-100%;
(b) catalytic dewaxing of at least a portion of the effluent from step a), carried out at a temperature of 200-500°C, at a pressure of 1-25 MPa, with an hourly space velocity of 0.05-50 h⁻¹, in the presence of 50-2000 litres of hydrogen/litre of effluent entering step b)), and in the presence of a catalyst comprising at least one hydrodehydrogenating element and at least one molecular sieve selected from ZBM-30, EU-2 and EU-11 zeolites.

2. A process according to claim 1, in which a catalyst containing at least one noble metal deposited on an amorphous silica-alumina is employed in step a).

3. A process according to one of the preceding claims, in which in step a), a catalyst is used that is essentially constituted by 0.05-10% by weight of at least one noble group VIII metal deposited on an amorphous silica-alumina support containing 5-90% by weight of silica, with a BET specific surface area of 100-500 m²/g and the catalyst has:
• a mean pore diameter in the range 1-12 nm;
• a pore volume of pores with a diameter in the range between the mean diameter as hereinbefore defined reduced by 3 nm and the mean diameter as hereinbefore defined increased by 3 nm is more than 40% of the total pore volume;
• a noble metal dispersion in the range 20% - 100%;
• a coefficient of distribution of the noble metal of more than 0.1.

4. A process according to one of the preceding claims, in which the noble metal in the catalyst for step a) is platinum and/or palladium.

5. A process according to one of the preceding claims, in which all of the effluent from step a) is treated in step b).

6. A process according to one of claims 1 to 4, in which the effluent from step a) is distilled to separate the light gases and at least one residue containing compounds with a boiling point of more than at least 340°C, said residue undergoing step b).

7. A process according to one of the preceding claims, in which the effluent from step b) is distilled to separate an oil containing compounds with a boiling point of more than at least 340°C.

8. A process according to claim 7, comprising atmospheric distillation followed by vacuum distillation of the atmospheric residue.

9. A process according to one of the preceding claims, in which the feed undergoing step a) previously undergoes hydrotreatment then optional separation of water, ammonia and hydrogen sulphide.

10. A process according to one of the preceding claims, in which the catalytic dewaxing catalyst also contains at least one zeolite selected from the group formed by NU-10, EU-1, EU-13, ferrierite, ZSM-22, Theta-1, ZSM-50, ZSM-23, NU-23, ZSM-35, ZSM-38, ZSM-48, ISI-1, KZ-2, ISI-4, KZ-1.

11. A process according to one of the preceding claims, in which the effluent from step b) undergoes a hydrofinishing step before being distilled.

12. A process according to one of the preceding claims, in which the treated hydrocarbon feed contains at least 20% by volume of compounds with boiling points above 340°C.

13. A process according to any one of the preceding claims, in which the treated hydrocarbon feed is selected from the group formed by effluents from a Fischer-Tropsch unit, vacuum distillates from straight run distillation of crude oil, vacuum distillates from conversion units, vacuum distillates from aromatic compound extraction units, vacuum distillates originating from desulphurisation or hydroconversion of atmospheric residues and/or vacuum residues, deasphalted oils, hydrocracking residues or any mixture of said feeds.

## Patentansprüche

1. Verfahren zur Herstellung von Ölen aus einer Kohlenwasserstoffcharge, wobei das Verfahren die folgenden aufeinander folgenden Schritte umfasst:
(a) Umwandlung der Charge mit gleichzeitiger Hydroisomerierung mindestens eines Teils der n-Paraffine der Charge, wobei die Charge einen Schwefelgehalt unter 1.000 ppm pds, einen Stickoxidgehalt unter 200 ppm pds, einen Metallgehalt unter 50 ppm pds, einen Sauerstoffgehalt von höchstens 0,2 % pds hat, wobei der Schritt bei einer Temperatur von 200 bis 500 °C, unter einem Druck zwischen 2 und 25 MPa, mit einer Raumgeschwindigkeit von 0,1 bis 10h⁻¹, in Gegenwart von Wasserstoff und in Gegenwart eines Katalysators stattfindet, der mindestens ein Edelmetall enthält, das auf einem amorphen Säureträger niedergeschlagen ist, wobei die Edelmetalldispersion zwischen 20 und 100 % liegt.
(b) Katalytisches Entparaffinieren mindestens eines Teils des ablaufenden Mediums, das aus Schritt (a) hervorgegangen ist, das bei einer Temperatur von 200 bis 500 °C realisiert wird, unter einem Druck von 1 bis 25 Mpa, mit einer stündlichen Volumengeschwindigkeit von 0,05 bis 50h⁻¹, in Gegenwart von 50 - 2.000 Liter Wasserstoff/Liter ablaufendes Medium, das in den Schritt (b) eintritt, und in Gegenwart eines Katalysators, der mindestens ein hydro-dehydrierendes Element und mindestens ein Molekularsieb umfasst, ausgewählt aus der Gruppe, gebildet aus ZBM-30, EU-2 und EU-11.

2. Verfahren nach Anspruch 1, in dem für den Schritt (a) ein Katalysator verwendet wird, der mindestens ein Edelmetall enthält, das auf einem amorphen Alumina-Silika niedergeschlagen ist.

3. Verfahren nach einem der vorstehenden Ansprüche, bei dem für Schritt (a) ein Katalysator verwendet wird, der im Wesentlichen aus 0,05 bis 10 Gew.-% mindestens eines Edelmetalls der Gruppe VIII besteht, das auf einem amorphen Alumina-Silika-Träger niedergeschlagen ist, der 5 bis 90 Gew.-% Silika enthält und eine spezifische Oberfläche BET von 100 bis 500 m²/g aufweist, und wobei der Katalysator aufweist:
- einen mittleren Porendurchmesser zwischen 1 bis 12 nm.
- ein Porenvolumen der Poren deren Durchmesser zwischen dem mittleren Durchmesser, wie zuvor definiert, der um 3 nm verringert ist, und dem mittlere Durchmesser, wie zuvor definiert, der um 3 nm erhöht ist, liegt, der höher als 40 % des Gesamtporenvolumes ist,
- eine Edelmetalldispersion zwischen 20 und 100 %
- einen Verteilungskoeffizienten des Edelmetalls über 0,1.

4. Verfahren nach einem der vorstehenden Ansprüche, bei dem das Edelmetall des Katalysators aus Schritt (a) Platin und/oder Palladium ist.

5. Verfahren nach einem der vorstehenden Ansprüche, in dem die Gesamtheit des abfließenden Mediums aus Schritt (a) in Schritt (b) behandelt wird.

6. Verfahren nach einem der Ansprüche 1 bis 4, in dem das abfließende Medium, das aus Schritt (a) hervorgegangen ist, destilliert wird, um die Leichtgase und mindestens einen Rückstand, der die Verbindungen mit einem Siedepunkt von mindestens 340 °C enthält, zu separieren, wobei der Rückstand dem Schritt (b) unterzogen wird.

7. Verfahren nach einem der vorstehenden Ansprüche, in dem das abfließende Medium, das aus Schritt (b) hervorgegangen ist, destilliert wird, um ein Öl zu separieren, das Verbindungen mit einem Siedepunkt von mindestens 340 °C enthält.

8. Verfahren nach Anspruch 7, das eine atmosphärische Destillation gefolgt von einer Vakuumdestillation des atmosphärischen Rückstands umfasst.

9. Verfahren nach einem der vorstehenden Ansprüche, in dem die Charge, die Schritt (a) unterzogen wurde, zuvor eine Wasserstoffbehandlung durchgemacht hat, dann eventuell eine Separation des Wassers, des Ammoniaks und des Schwefelwasserstoffs.

10. Verfahren nach einem der vorstehenden Ansprüche, in dem der Katalysator der katalytischen Entparaffinierung ebenfalls mindestens ein Zeolith enthält, ausgewählt aus der Gruppe, gebildet aus NU-10, EU-1 EU-13, Ferrierit, ZSM-22, Theta-1, ZSM-50, ZSM-23, NU - 23, ZSM-35, ZSM-38, ZSM-48, ISI-1 KZ-2, ISI-4 und KZ-1.

11. Verfahren nach einem der vorstehenden Ansprüche, in dem das abfließende Medium, das aus Schritt (b) hervorgegangen ist, bevor es destilliert wird, einem Schritt der abschließenden Hydrobehandlung unterzogen wird.

12. Verfahren nach einem der vorstehenden Ansprüche, in dem die behandelte Kohlenwasserstoffcharge mindestens 20 Volumen-% der Verbindungen, die über 340°C sieden, enthält.

13. Verfahren nach einem der vorstehenden Ansprüche, in dem die behandelte Kohlenwasserstoffcharge ausgewählt ist aus der Gruppe, gebildet aus den abfliesenden Medien, die aus der Fischer-Tropsch-Einheit hervorgegangen sind, den Vakuumdestillaten, die aus der direkten Destillation des Rohöls, den Vakuumdestillaten, die aus den Umwandlungseinheiten hervorgegangen sind, den Vakuumdestillaten, die aus den aromatischen Extraktionseinheiten stammen, den Vakuumdestillaten, die aus der Entschwefelung oder der Umsetzung in Gegenwart von Wasserstoff der atmosphärischen Rückstände stammen und/oder den Vakuumrückständen, den entasphaltierten Ölen, den Hydrocracking-Rückständen oder jeder Mischung dieser Chargen.
